# EUROPEAN PATENT APPLICATION

(11) **EP 2 450 795 A1**
(43) Date of publication of application: **09.05.2012**
(21) Application number: 09846812.7
(22) Date of filing: 30.06.2009
(51) Int. Cl.: G06F 9/52

(54) **COMPUTER DEVICE, PARALLEL COMPUTER SYSTEM, AND SYNCHRONIZATION PROGRAM**

(71) Applicant: Fujitsu Limited, Kawasaki-shi, Kanagawa 211-8588 (JP)
(72) Inventor: HIGUCHI, Yuta, Kawasaki-shi Kanagawa 211-8588 (JP)
(74) Representative: Ward, James Norman
(86) International application number: PCT/JP2009/062015
(87) International publication number: WO 2011/001519

(57) **Abstract**

Computing devices each includes a processing unit and a receiving unit and receives a control packet that indicates an operation for shifting the state of a process via a network. Then, when receiving the control packet, each of the computing devices executes the operation indicated by the control packet. A parallel computer system having such computing devices includes a control packet creating device that periodically transmits a control packet to each computing device. The parallel computer system synchronizes, using the control packet, the time at which each computing device executes the operation.

## Description

### Field

The embodiments discussed herein are directed to a computing device, a parallel computer system, and a synchronous program.

### Background

Conventionally, parallel computer systems are used to compute complex calculation in a high performance computing (HPC) field, such as weather prediction. In the parallel computer systems, a plurality of calculating devices called nodes are connected to a management server via a network. The parallel computer systems processes, using nodes, programs at high speed that are used when computing complex calculation.

Specifically, a parallel computer system divides a job that is execution units of a program into processes and allocates the divided processes to the nodes. Here, the process is a program in which each node performs a computing operation. When acquiring a process, each node executes the computing operation of the obtained process. Then, when the computing operation of the process is completed, each node transmits the computation result to a management server and completes the computing operation.

Furthermore, the parallel computer system transmits a new process to a node that completes the computing operation and allows the node to execute the computing operation. Then, the parallel computer system aggregates the results of the computing operations executed by the node in the management server and obtains the computation results of all of the jobs.

In the following, the computing operation executed by each node will be described in detail. First, when acquiring a process, each node starts a computing operation and executes a creation operation in which the acquired process is loaded in a storing unit and is allowed to be executed. Here, each node may sometimes executes a computing operation allocated to each node by using a log of a computing operation performed by another node.

Accordingly, when the acquired process is loaded in the storing unit, each node executes an initialization operation that identifies another node to which the process is allocated. Then, when identifying all of the other nodes after processes are allocated to all of the nodes, each node executes a calculation operation that performs calculation of the process.

Then, when acquiring the result of the calculation operation, each node executes a transmission operation that transmits the result of the calculation operation to the management server. Then, when transmitting the calculation result, each node completes the computing operation of the process.

With the parallel computer system, as a technology for synchronizing the computing operations of nodes, there is a known technology, for synchronizing, using a synchronous point, the progress of the calculation operations executed by the nodes.

Specifically, with the parallel computer system, a synchronous point that is used to perform synchronization with another node is set at each node that simultaneously executes a process in the middle of processing a program that is executed as a process. Each node executes a calculation operation, and, when each node continues performing the calculation operation to the synchronous point, each node notifies another node that the calculation operation advances to the synchronous point. Then, when all of the nodes to which processes are allocated continue performing the calculation operation to the synchronous points, each node executes a calculation operation that is to be performed after passing through the synchronous point.

### Citation List

### Patent Literature

Patent Literature 1: Japanese Laid-open Patent Publication No. 2001-142852

### Summary

### Technical Problem

However, with the technology for setting the synchronous points and synchronizing the progress of each of the calculation operations executed by each node, the parallel computer system only synchronizes the progress of each of the calculation operations executed by each node; therefore, the parallel computer system does not synchronizes operations, such as creation operations. Accordingly, because each node independently starts a computing operation of a process at a different time, there is a problem in that computing operations are non-cooperatively executed in the entire parallel computer system.

For example, with the technology described above, when the timing of the acquisition of processes is shifted, a node that acquires a process first starts a computing operation of a process earlier than a node that has not acquired a process yet. Accordingly, when the timing of the acquisition of the processes is shifted, each node executes the creation operation at a different timing and starts an initialization operation. However, each node continues performing the initialization operation until it identifies a node to which another process is allocated. Accordingly, with the technology described above, there is a problem in that, between nodes, the time period from the acquisition of a process to the completion of a computing operation is not coincident with the time period during which each node actually executes the computing operation.

Furthermore, for example, with the technology described above, the parallel computer system allocates a new process to a node that completes the computing operation of the process. Here, the parallel computer system only synchronizes the progress of each of the calculation operations executed by each node. Accordingly, the parallel computer system does not appropriately allocate a process.

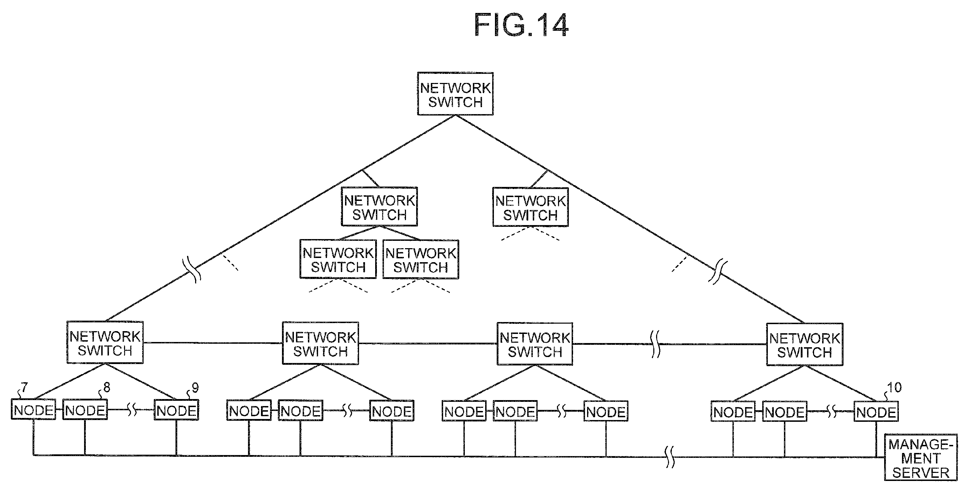

This will be specifically described with reference to FIG. 14. FIG. 14 is a schematic diagram illustrating a conventional technology. As illustrated in FIG. 14, the nodes are connected each other using a value exchange network that is a tree structure network. The network switches illustrated in FIG. 14 are arranged at branch points in the value exchange network and receives and transmits information flowing on the network. Furthermore, as illustrated in the lower portion of FIG. 14, each of the nodes are connected to a management server using a management network.

Here, when each node communicates with another node in order to acquire the progress of a computing operation executed by another node, each node can communicate at high speed with a node located closer to the subject node than a node is far from the subject node. Accordingly, in the parallel computer system, when two processes are allocated, the processes are preferably allocated to two nodes that are relatively located close each other. For example, when the parallel computer system allocates two processes, it is preferable that the parallel computer system allocates the processes to a node 7 and a node 8 illustrated in FIG. 14.

Each node almost simultaneously completes the computing operation of the allocated process. However, when the node 7 and a node 10 complete the computing operation before the node 8 completes the computing operation, the parallel computer system allocates a new process to each of the node 7 and the node 10. Accordingly, there is a problem in that the parallel computer system does not appropriately use computer resources.

Accordingly, the present invention has been conceived in light of the circumstances described above, and an object thereof is to provide a technology in which each computing device cooperatively operates and the difference between the time period from the acquisition of a process to the completion of the computing operation and the time period during which each node actually executes the computing operation can be reduced, thereby appropriately using the computer resources.

### Solution to Problem

If an instruction to be executed on a process occurs or if an instruction included in a process is executed, a computing device disclosed in the present invention temporarily suspends the execution of the instruction. Then, when receiving control information indicating the same instruction as that suspended, the computing device executes the suspended instruction. Advantageous Effects of Invention

With a computing device, a parallel computer system, and a synchronous program disclosed in the present invention, by each computing device cooperatively operating, it is possible to reduce the difference between the time period from the acquisition of a process to the completion of the computing operation and the time period during which each node actually operates, thereby appropriately using the computer resources.

### Brief Description of Drawings

FIG. 1 is a block diagram illustrating a computing device according to a first embodiment.
FIG. 2 is a schematic diagram illustrating a parallel computer system according to a second embodiment.
FIG. 3 is a block diagram illustrating the configuration of a computing device and a control packet creating device according to the second embodiment.
FIG. 4 is a schematic diagram illustrating a table in which packet numbers are associated with instructions executed on processes.
FIG. 5 is a flowchart illustrating the flow of a computing operation of a process executed by the computing device.
FIG. 6 is a flowchart illustrating the flow of a stop instruction and a resumption operation executed by the computing device.
FIG. 7 is a flowchart illustrating the flow of an interrupt instruction executed by the computing device.
FIG. 8 is a flowchart illustrating the flow of an output instruction executed by the computing device.
FIG. 9 is a flowchart illustrating the flow of a program execution instruction executed by the computing device.
FIG. 10 is a block diagram illustrating a computer that executes a program having the same function as that performed by a computing device 1 and a computing device 1b.
FIG. 11 is a flowchart illustrating the flow of operations performed by a program.
FIG. 12 is a schematic diagram illustrating the configuration of the parallel computer system.
FIG. 13 is a schematic diagram illustrating a parallel computer system having a high-performance switch.
FIG. 14 is a schematic diagram illustrating a conventional technology.

### Description of Embodiments

Preferred embodiments of a computing device, a parallel computer system, and a synchronous program disclosed in the present invention will be explained with reference to the accompanying drawings.

### [a] First Embodiment

In the following embodiments, the configuration of a computing device 1 will be described first and then the flow of an operation performed by the computing device 1 will be described.

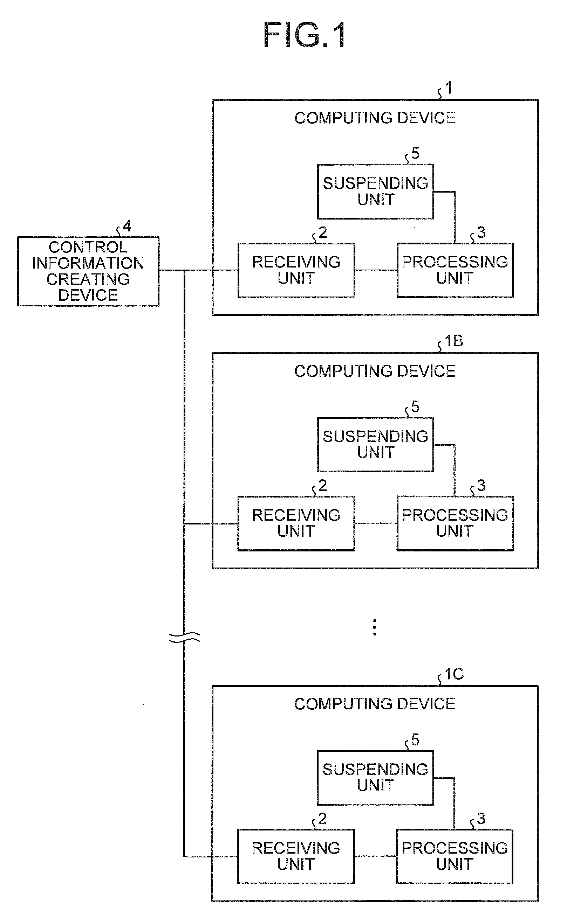

First, the configuration of a computing device according to a first embodiment will be described with reference to FIG. 1. FIG. 1 is a block diagram illustrating a computing device according to a first embodiment. As illustrated in FIG. 1, the computing device 1 includes a receiving unit 2, a processing unit 3, and a suspending unit 5. The receiving unit 2 is connected to a control information creating device 4, which is arranged outside of the computing device 1, via a network. A computing device 1B and a computing device 1C that have the same configuration as the computing device 1 are connected to the network. Although not illustrated in FIG. 1, in addition to the computing devices illustrated in FIG. 1, many computing devices are connected to the network.

The control information creating device 4 creates an instruction to be executed on a process that is distributed or creates control information indicating an instruction contained in the distributed process. Furthermore, the control information creating device 4 transmits the control information to the entire network.

The receiving unit 2 receives the control information transmitted from the control information creating device 4. When an instruction to be executed on a process has occurred or when executing an instruction contained in the distributed process, the suspending unit 5 temporarily suspends the execution of the instruction.

When the instruction suspended by the suspending unit 5 is associated with the control information received by the receiving unit 4, the processing unit 3 executes the instruction that is suspended by the suspending unit 5.

In the following, the flow of an operation performed by the computing device 1 according to the first embodiment will be described. First, the receiving unit 2 receives, via the network, the control information that is output from the control information creating device 4. If an instruction to be executed on a process has occurred or When executing an instruction contained in a process that is distributed, the suspending unit 5 suspends the instruction and suspends the instruction executed by the processing unit 3. When the receiving unit 2 receives control information associated with the instruction that is suspended by the suspending unit 5, the processing unit 3 executes the instruction suspended by the suspending unit 5.

As described above, when an instruction that is to be executed on a process has occurred, the computing device 1 according to the first embodiment allows the suspending unit 5 to suspend the instruction that has occurred. Then, when the receiving unit 2 receives the control information associated with the instruction that is suspended by the suspending unit 5, the computing device 1 executes the instruction suspended by the suspending unit 5.

Accordingly, because the computing device 1 executes the instruction on the process at the time when it acquires the control information, the time at which the instruction to be executed on the process can be synchronized with other computing devices. Therefore, the computing device 1 cooperatively executes the instruction on the process.

### [b] Second Embodiment

In a second embodiment, a parallel computer system that includes computing devices 1b that execute each instruction on each computing operation indicated by control information will be described with reference to the drawings.

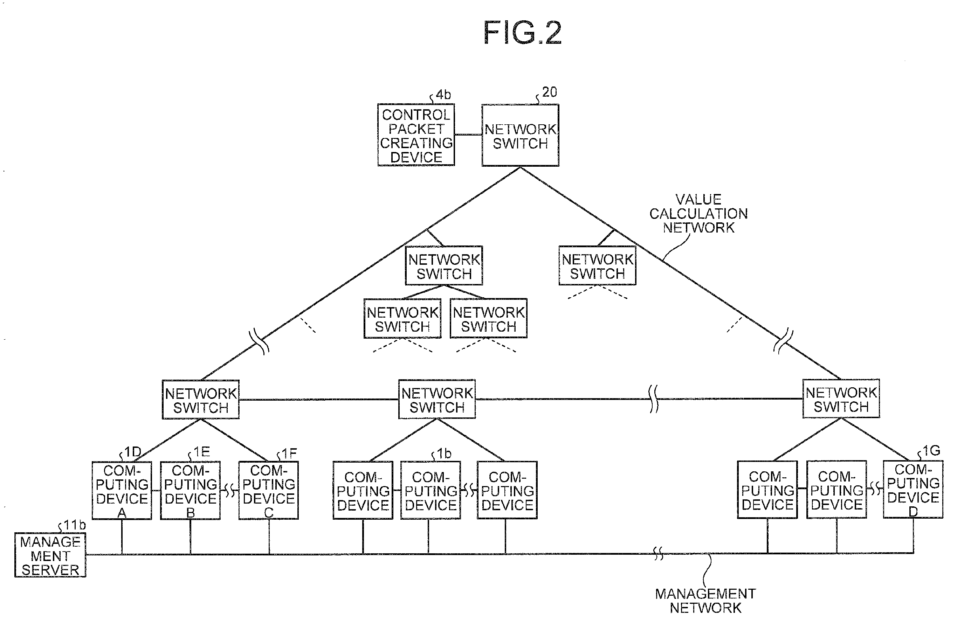

First, the configuration of the parallel computer system according to the second embodiment will be described with reference to FIG. 2. FIG. 2 is a schematic diagram illustrating a parallel computer system according to a second embodiment. Although not illustrated in FIG. 2, in addition to the computing device 1b, other computing devices are connected to a value calculation network via each network switch. All of the computing devices including computing devices A to D have the same function as that performed by the computing device 1b. In the following description, the computing device 1b represents all of the computing devices including the computing devices A to D.

As illustrated in FIG. 2, the parallel computer system according to the second embodiment connects a plurality of computing devices 1b using the value exchange network in which communication is performed at high speed. Each of the computing devices 1b transmits/receives, via the value exchange network, a value needed for a computing operation with other computing devices 1b.

Furthermore, as illustrated in the lower part of FIG. 2, in addition to the value calculation network, each of the computing devices 1b is connected to a management network. The parallel computer system transmits, via the management network, a process that allows each computing device 1b to execute a computing operation. Furthermore, by using the management network, the parallel computer system aggregates, in a management server 11b, the results of the computing operation executed by each of the computing devices 1b.

Specifically, by using the management server 11b connected to the management network, the parallel computer system manages each of the computing devices 1b. By using the management network, the management server 11b transmits a process distributed to each computing device 1b.

Furthermore, by using the management network, the management server 11b aggregates the results of processes performed each of the computing devices 1b. Then, by using the results of the processes aggregated in the management server 11b, the parallel computer system proceeds the process of the job.

In the following, a control packet creating device 4b will be described. The control packet creating device 4b periodically creates a control packet and periodically transmits, using multi address transmission, the created control packet to each computing device 1b arranged on the network. The control packet mentioned here represents an instruction to be executed on a process.

Specifically, the control packet creating device 4b creates, as information indicating an instruction, a control packet containing a sequence number that indicates the order of the creation of the control packets. Then, the control packet creating device 4b transmits the created control packets to all of the computing devices 1b connected to the network at predetermined time intervals.

Furthermore, as illustrated in FIG. 2, the control packet creating device 4b is connected to a network switch 20 that is arranged at the top level of the value calculation network in the tree structure. The control packet creating device 4b transmits the control packets to each of the computing devices 1b using the value calculation network.

In the following, an instruction to be executed on the received process by the computing devices 1b according to the second embodiment will be described. The instruction to be executed on the process means an instruction that is not included in the process. In other words, the instruction that is not included in the process is an operating system (OS) in each of the computing devices 1b or an instruction designated by the externally arranged management server 11b. Examples of the instruction that is not included in the process are, for example, a resumption instruction, a creation instruction, a transmission instruction, an interrupt instruction, an interrupt inhibit instruction, an output instruction, and a program execution instruction.

Furthermore, the instruction included in the process is a predetermined instruction that is to be executed and that is designated in a process received by the computing device 1b from the management server 11b. An example of an instruction included in a process is a stop instruction.

The resumption instruction occurs when the resumption of temporarily stopped operation is received from the OS, a resident program that manages each of the computing devices 1b, the management server 11b, or the like. The creation instruction occurs when each of the computing devices 1b acquires a process. The transmission instruction occurs when each of the computing devices 1b completes the process. The interrupt instruction occurs when a request for performing an operation that is different from an operation currently performed is received from the OS, the resident program, the management server 11b, or the like.

The interrupt inhibit instruction occurs when a request for executing, with priority, the operation that is currently being executed is received from the OS, the resident program, the management server 11b, or the like. The output instruction occurs when a request for outputting a signal indicating the state of each of the computing devices 1b to the management server 11b is received from the OS, the resident program, the management server 11b, or the like. The program execution instruction occurs when a request for executing a program that is different from an operation currently being executed is received from the OS, the resident program, the management server 11b, or the like.

Even when an instruction is not included in a process, such as the interrupt inhibit instruction, the execution of the instruction may sometimes be directed to a process. Furthermore, the stop instruction may sometimes be requested from the OS in each of the computing devices 1b, the externally arranged management server 11b, or the like.

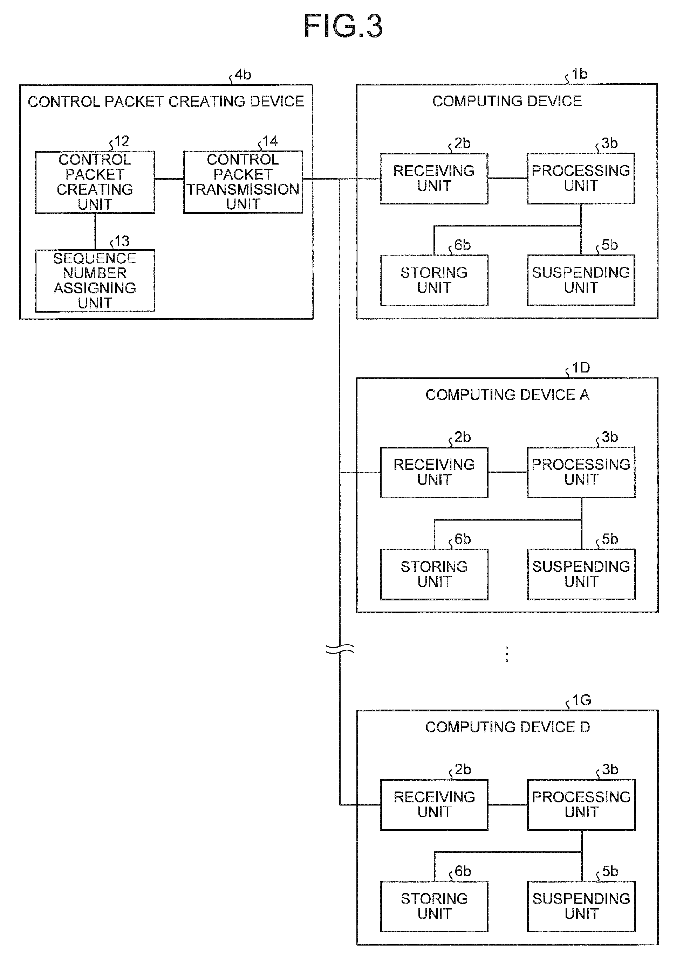

In the following, the configuration of each computing device 1b and the control packet creating device 4b according to the second embodiment will be described with reference to FIG. 3. FIG. 3 is a block diagram illustrating the configuration of a computing device and a control packet creating device according to the second embodiment. As illustrated in FIG. 3, each of the computing devices 1b includes a receiving unit 2b, a processing unit 3b, a suspending unit 5b, and a storing unit 6b. The control packet creating device 4b includes a control packet creating unit 12, a sequence number assigning unit 13, and a control packet transmission unit 14. Similar to each computing device, which is not illustrated in FIG. 3 though, a computing device A1D and a computing device D1G have the same configuration as the computing device 1b.

The sequence number assigning unit 13 creates a sequence number and transfers it to the control packet creating unit 12. Specifically, the sequence number assigning unit 13 creates a sequence number that indicates the order of the creation of the control packets and transfers it to the control packet creating unit 12. The control packet creating unit 12 creates a control packet, adds a sequence number transferred from the sequence number assigning unit 13 to the control packet, and transfers the control packet to the control packet transmission unit 14.

The control packet transmission unit 14 transmits, using multi address transmission, the control packet transferred from the control packet creating unit 13 to each of the computing devices 1b on the network. For example, the control packet transmission unit 13 transmits, using multicast transmission, the control packet to each of the computing devices 1b on the network.

The receiving unit 2b receives a control packet indicating an instruction to be executed on a process. Specifically, the receiving unit 2b receives, from the control packet creating device 4b via the value exchange network, the control packet that is transmitted to multiple addresses.

The receiving unit 2b acquires, using the management network, a process distributed by the management server 11b, when acquiring a process from the management server 11b, the receiving unit 2b transfers the acquired process to the processing unit 3b.

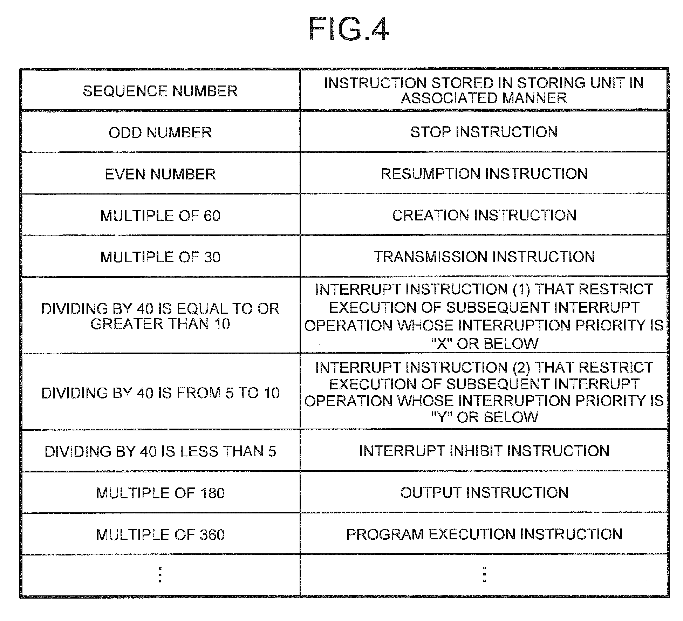

The storing unit 6b stores therein, in an associated manner, instructions to be executed on processes and sequence numbers added to control packets. Specifically, as illustrated in FIG. 4, the storing unit 6b stores therein, in an associated manner, sequence numbers and instructions to be executed on processes. FIG. 4 is a schematic diagram illustrating a table in which packet numbers are associated with instructions to be executed on processes.

When an instruction to be executed on a process occurs, the suspending unit 5b suspends the instruction. Specifically, when an instruction to be executed on the acquired process occurs, the suspending unit 5b suspends the instruction and the processing unit 3b suspends the execution of the instruction.

In the following, an operation performed by the suspending unit 5b will be described in detail. When the processing unit 3b acquires a process and thus when a creation instruction, which is an instruction that allows the acquired process to execute a creation operation, has occurred, the suspending unit 5b suspends the creation instruction that has occurred. Accordingly, the suspending unit 5b allows the processing unit 3b to wait to execute the creation operation.

Furthermore, when a calculation operation executed on the acquired process and thus when a transmission instruction, which is an instruction that allows the processing unit 3b to execute a transmission operation, has occurred, the suspending unit 5b suspends the transmission instruction that has occurred. Accordingly, the suspending unit 5b allows the processing unit 3b to wait to execute the transmission operation.

There may be a case in which each of the computing devices 1b executes a program (for example, a resident program) that is different from the distributed process. However, each of the computing devices 1b does not simultaneously execute both the process and the resident program. Accordingly, each of the computing devices 1b executes a stop operation for temporarily stopping the computing operation that is executed by the processing unit and then executes the resident program. The parallel computer system according to the second embodiment synchronizes the time at which each of the computing devices 1b executes the stop operation.

When a stop instruction, which is an instruction that allows the processing unit 3b to execute the stop operation, has occurred, the suspending unit 5b suspends the stop instruction that has occurred. Accordingly, the suspending unit 5b allows the processing unit 3b to wait to execute the transmission operation.

Furthermore, when the execution of the resident program completes, each of the computing devices 1b executes the resumption instruction that resumes the temporarily stopped computing operation. Similar to a case of executing the creation operation, the parallel computer system according to the second embodiment synchronizes the time at which each of the computing devices 1b executes the resumption operation.

Accordingly, when a resumption instruction, which is an instruction that allows the processing unit 3b to execute the resumption operation, has occurred, the suspending unit 5b suspends the resumption instruction that has occurred. Accordingly, the suspending unit 5b allows the processing unit 3b to wait to execute the transmission operation.

Here, each of the computing devices 1b executes the computing operation by using priority that is set to the process to be executed. For example, when acquiring a process having priority "2" during executing the computing operation on a process having priority "1", each of the computing devices 1b executes the computing operation on the process having the priority "2" with priority. Specifically, each of the computing devices 1b allows the computing operation executed on the process having the priority "1" to wait and executes the interrupt operation in which the computing operation is executed on the process having the priority "2".

The parallel computer system according to the second embodiment also synchronizes the time at which each of the computing devices 1b executes the interrupt operation. When the interrupt instruction, which is an instruction that allows the processing unit 3b to execute the interrupt operation, has occurred, the suspending unit 5b suspends the interrupt instruction that has occurred. Accordingly, the suspending unit 5b allows the processing unit 3b to wait to execute the interrupt operation.

There may be a case in which each of the computing devices 1b executes an interrupt inhibit operation for not executing the interrupt operation in order to prioritize a process currently being executed. Accordingly, the parallel computer system according to the second embodiment synchronizes the time at which each of the computing devices 1b does not execute the interrupt operation.

When the interrupt inhibit instruction for not executing the interrupt operation has occurred in the processing unit 3b, the suspending unit 5b suspends the interrupt inhibit instruction that has occurred. Accordingly, the suspending unit 5b allows the processing unit 3b to wait to execute the interrupt inhibit operation.

Here, in order to recognize the processing state of the entire parallel computer system, each of the computing devices 1b set, to a predetermined time, the execution of the output operation for outputting signals used to notify of the state of each of the computing devices 1b. Accordingly, in order to acquire signals from all of the computing devices 1b at a time, the parallel computer system according to the second embodiment synchronizes, using a control packet, the time at which each of the computing devices 1b executes the transmission operation.

When the output instruction, which is an instruction that allows the processing unit 3b to execute the output operation, the suspending unit 5b suspends the output instruction that has occurred. Accordingly, the suspending unit 5b allows the processing unit 3b to wait to execute the output operation.

There may be a case in which each of the computing devices 1b is instructed to execute a program execution operation for executing a program (for example, a resident program) that is different from the process currently being executed. The parallel computer system according to the second embodiment synchronizes the time at which each of the computing devices 1b executes the program execution operation.

Accordingly, when the program execution instruction, which is an instruction that allows the processing unit 3b to execute the program execution operation, has occurred, the suspending unit 5b suspends the program execution instruction that has occurred. Accordingly, the suspending unit 5b allows the processing unit 3b to wait to execute the program execution operation.

Then, in accordance with the sequence numbers and the instructions stored in the storing unit 6b, when the processing unit 3b determines that the instruction suspended by the suspending unit 5b is associated with the instruction indicated by the control packet received by the receiving unit 2b, the processing unit 3b executes the instruction suspended by the suspending unit 5b.

Specifically, the processing unit 3b reads a sequence number of the control packet received by the receiving unit 2b. Then, the processing unit 3b reads, from the storing unit 6b, an instruction that is stored in association with the read sequence number. The processing unit 3b determines whether the read instruction is suspended by the suspending unit 5b. Subsequently, when the read instruction is suspended by the suspending unit 5b, the processing unit 3b executes the suspended instruction.

In the following, the operation executed by the processing unit 3b will be specifically described with reference to FIG. 4. When the sequence number of the control packet received by the receiving unit 2b is an odd number, the processing unit 3b reads a stop instruction that is associated with the odd number and is stored in the storing unit 6b. Then, the processing unit 3b determines whether the read stop instruction is suspended by the suspending unit 5b. When the stop instruction is suspended by the suspending unit 5b, the processing unit 3b executes the stop instruction.

Furthermore, when the sequence number of the control packet received by the receiving unit 2b is an even number, the processing unit 3b reads a resumption instruction that is associated with the odd number and is stored in the storing unit 6b. Then, the processing unit 3b determines whether the read resumption instruction is suspended by the suspending unit 5b. When the resumption instruction is suspended by the suspending unit 5b, the processing unit 3b executes the resumption instruction.

Furthermore, when the sequence number of the control packet received by the receiving unit 2b is a multiple of 60, the processing unit 3b reads the creation instruction that is associated with a multiple of 60 and is stored in the storing unit 6b. Then, the processing unit 3b determines whether the read creation instruction is suspended by the suspending unit 5b. When the creation instruction is suspended by the suspending unit 5b, the processing unit 3b executes the creation instruction.

Furthermore, when the sequence number of the control packet received by the receiving unit 2b is a multiple of 30, the processing unit 3b reads a transmission instruction that is associated with a multiple of 30 and is stored in the storing unit 6b. Then, the processing unit 3b determines whether when the read transmission instruction is suspended by the suspending unit 5b. When the transmission instruction is suspended by the suspending unit 5b, the processing unit 3b executes the transmission instruction.

Here, the parallel computer system sets priority of the interrupt operation performed by each of the computing devices 1b using a control packet. For example, as illustrated in FIG. 4, the processing unit 3b may sometimes receive an interrupt instruction (1) that is used to set an instruction not being executed even when each of the computing devices 1b receives an instruction to execute the operation having the interruption priority "X" or below. When executing the interrupt instruction (1), each of the computing devices 1b executes the interrupt operation only when an instruction to execute the operation having the priority "X" or more has occurred.

Furthermore, for example, the processing unit 3b may sometimes receive an interrupt instruction (2) that is used to set an instruction not being executed even when each of the computing devices 1b receives an instruction to execute the operation having the interruption priority "Y" or below. When executing the interrupt instruction (2), each of the computing devices 1b executes the interrupt operation only when an instruction to execute the operation having priority "Y" or more has occurred occurs.

In the following, the flow of each interrupt instruction performed by the processing unit 3b will be described. When the remainder obtained by dividing the sequence number of the control packet received by the receiving unit 2b by 40 is equal to or greater than 10, the processing unit 3b reads the interrupt instruction (1) that is stored in the storing unit 6b in an associated manner. Then, the processing unit 3b determines whether the read interrupt instruction (1) is suspended by the suspending unit 5b. When the interrupt instruction (1) is suspended by the suspending unit 5b, the processing unit 3b executes the interrupt instruction (1).

Furthermore, when the remainder obtained by dividing the sequence number of the control packet received by the receiving unit 2b by 40 is from 5 to 10, the processing unit 3b reads the interrupt instruction (2) that is stored in the storing unit 6b in an associated manner. Then, the processing unit 3b determines whether the read interrupt instruction (2) is suspended by the suspending unit 5b. When the interrupt instruction (2) is suspended by the suspending unit 5b, the processing unit 3b executes the interrupt instruction (2).

Furthermore, when the remainder obtained by dividing the sequence number of the control packet received by the receiving unit 2b by 40 is less than 5, the processing unit 3b reads the interrupt inhibit instruction that is stored in the storing unit 6b in an associated manner. Then, the processing unit 3b determines whether the read interrupt inhibit instruction is suspended by the suspending unit 5b. When the interrupt inhibit instruction is suspended by the suspending unit 5b, the processing unit 3b executes the interrupt inhibit instruction.

Furthermore, when the sequence number of the control packet received by the receiving unit 2b is a multiple of 180, the processing unit 3b reads an output instruction that is associated with a multiple of 180 and is stored in the storing unit 6b. Then, the processing unit 3b determines whether the read output instruction is suspended by the suspending unit 5b. When the output instruction is suspended by the suspending unit 5b, the processing unit 3b executes the output instruction.

Furthermore, when the sequence number of the control packet received by the receiving unit 2b is a multiple of 360, the processing unit 3b reads the program execution instruction that is associated with a multiple of 360 and is stored in the storing unit 6b. Then, the processing unit 3b determines whether the read program execution instruction is suspended by the suspending unit 5b. When the program execution instruction is suspended by the suspending unit 5b, the processing unit 3b executes the program execution instruction.

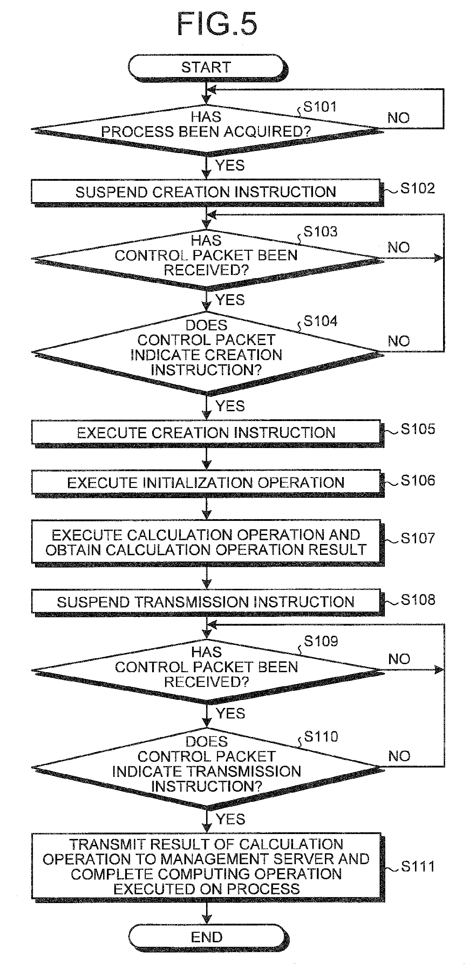

In the following, the flow of an operation performed by the parallel computer system will be described with reference to FIGs. 5 to 9. First, the flow of a computing operation of a process executed by the computing device 1b will be described with reference to FIG. 5. FIG. 5 is a flowchart illustrating the flow of a computing operation of a process executed by the computing device. The computing device 1b starts the computing operation triggered when a power supply is turned on.

First, each of the computing devices 1b determines whether the receiving unit 2b has acquired a process (Step S101). Then, when the process has been acquired (Yes at Step S101), the suspending unit 5b suspends the creation instruction that occurs due to the acquisition of the process (Step S102). Then, the processing unit 3b determines whether a control packet has been received (Step S103). When the control packet has been received by the receiving unit 2b (Yes at Step S103), in accordance with the sequence numbers and the instructions stored in the storing unit 6, the processing unit 3b determines whether the instruction indicated by the received control packet is the creation instruction (Step S104).

When the received control packet indicates the creation instruction (Yes at Step S104), the processing unit 3b executes the creation instruction (Step S105). In contrast, when the process has not been acquired (No at Step S101), the processing unit 3b waits until a new packet is received.

When the receiving unit 2b has not received the control packet (No at Step S103), the processing unit 3b waits to receive the packet. When the control packet received by the receiving unit 2b does not indicate the creation instruction of the process (No at Step S104), the processing unit 3b waits to receive a new packet.

When the processing unit 3b executes the creation instruction, the processing unit 3b executes the initialization operation (Step S106). Then, the processing unit 3b executes the calculation operation on the process and obtains the result of the calculation operation (Step S107). Then, the suspending unit 5b suspends the transmission instruction that occurs due to the acquisition of the result of the calculation operation (Step S108).

Then, the processing unit 3b determines whether a control packet has been received by the receiving unit 2b (Step S109). When the control packet has been received by the receiving unit 2b (Yes at Step S109), in accordance with the sequence numbers and the instructions stored in the storing unit 6b, the processing unit 3b determines whether the received control packet indicates the transmission instruction (Step S110).

When the received control packet indicates the transmission instruction (Yes at Step S110), the processing unit 3b transmits the result of the received calculation operation to the management server 11b and completes the computing operation of the process (Step S111).

In contrast, when the control packet has not been received by the receiving unit 2b (No at Step S109), the processing unit 3b waits to receive the control packet. Furthermore, when the received control packet does not indicate the transmission instruction (No at Step S110), the processing unit 3b does not execute the transmission instruction until the control packet indicating the transmission instruction is received.

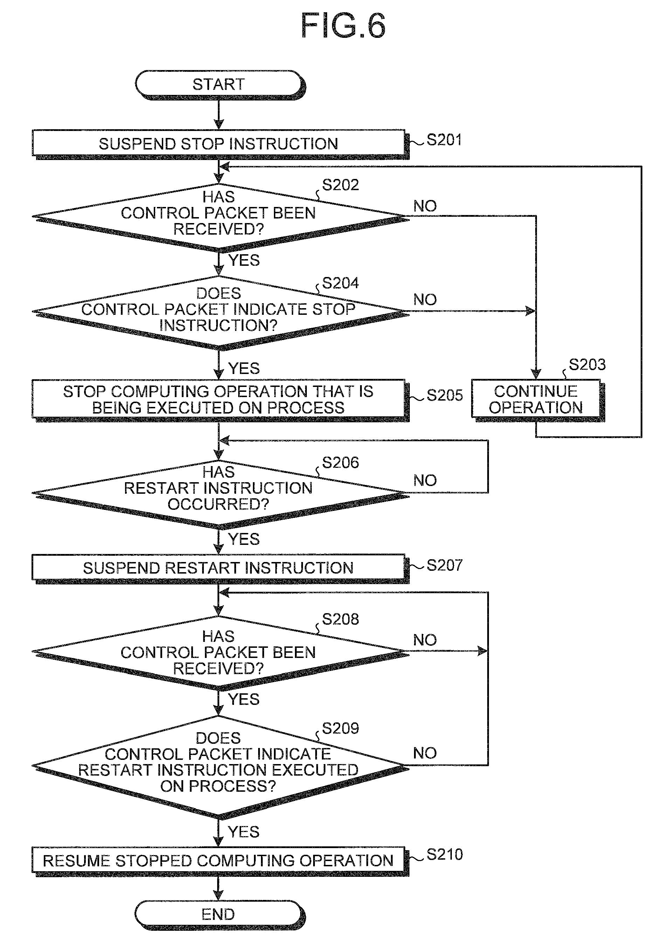

In the following, the flow of the stop instruction and the resumption operation performed by the computing device 1b will be described with reference to FIG. 6. FIG. 6 is a flowchart illustrating the flow of the stop instruction and the resumption operation executed by each of the computing devices 1b. Each of the computing devices 1b starts an operation triggered when an instruction of the stop operation occurs.

First, the suspending unit 5b suspends the stop instruction (Step S201). Then, the processing unit 3b determines whether the receiving unit 2b has received the control packet (Step S202). When the control packet has been received (Yes at Step S202), in accordance with the sequence numbers and the instructions stored in the storing unit 6b, the processing unit 3b determines whether the instruction indicated by the control packet is the stop instruction (Step S204).

When the instruction indicated by the control packet is the stop instruction (Yes at Step S204), the processing unit 3b stops the computing operation of the process (Step S205). In contrast, when the control packet has not been received (No at Step S202), the processing unit 3b continues executing the operation that is being executed (Step S203). When the instruction indicated by the received control packet does not indicate the stop instruction (No at Step S204), the processing unit 3b continues the process that is being executed (Step S203).

In contrast, when the processing unit 3b stops the computing operation that is being executed on the process (Step S205), the processing unit 3b determines whether the resumption instruction that allows the stopped process to resume the computing operation has occurred (Step S206). When the resumption instruction has occurred (Yes at Step S206), the suspending unit 5b suspends the resumption instruction that has occurred (Step S207).

Then, the processing unit 3b determines whether the control packet has been received by the receiving unit 2b (Step S208). When the control packet has been received by the receiving unit 2b (Yes at Step S208), in accordance with the sequence numbers and the instructions stored in the storing unit 6b, the processing unit 3b determines whether the received control packet indicates the resumption instruction (Step S209).

When the received control packet instructs the resumption instruction (Yes at Step S209), the processing unit 3b resumes the received and temporally stopped computing operation (Step S210) and completes the computing operation of the process.

In contrast, after executing the stop instruction (Step S205), when the resumption instruction has not occurred (No at Step S206), the processing unit 3b allows the process to be stopped without processing anything. Furthermore, when the control packet has not been received by the receiving unit 2b (No at Step S208), the processing unit 3b waits for the control packet. Furthermore, when the received control packet does not indicate the resumption instruction (No at Step S209), the processing unit 3b does not execute the resumption instruction until it receives the control packet indicating the resumption instruction.

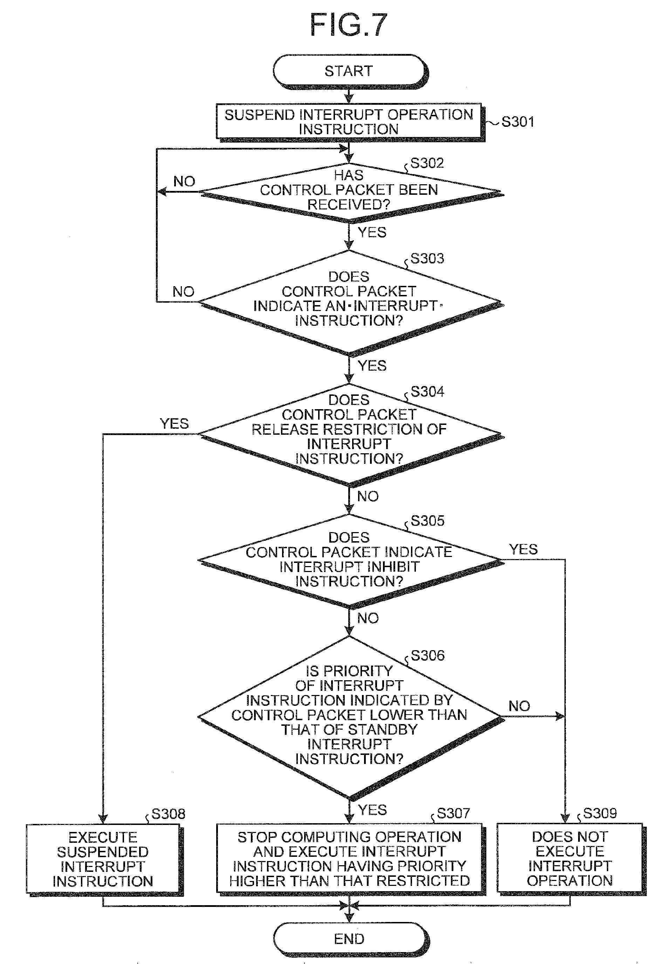

In the following, the flow of the interrupt instruction performed by the computing device 1b executes will be described with reference to FIG. 7. FIG. 7 is a flowchart illustrating the flow of an interrupt instruction executed by the computing device. Each of the computing devices 1b starts an operation triggered when an interrupt operation instruction occurs.

First, the suspending unit 5b suspends the interrupt operation instruction that has occurred (Step S301). The processing unit 3b determines whether a control packet has been received by the receiving unit 2b (Step S302). When a control packet has been received (Yes at Step S302), in accordance with the sequence numbers and the instructions stored in the storing unit 6b, the processing unit 3b determines whether the instruction indicated by the control packet is an interrupt instruction (Step S303).

When the instruction indicated by the control packet is an interrupt instruction (Yes at Step S303), the processing unit 3 determines whether the control packet releases the restriction of the interrupt instruction (Step S304). When the control packet releases the restriction of the interrupt instruction (Yes at Step S304), the processing unit 3b executes the interrupt instruction that is suspended by the suspending unit 5b (Step S308). Then, the processing unit 3b completes the operation.

In contrast, when the control packet does not release the restriction of the interrupt instruction (No at Step S304), the processing unit 3b determines whether the control packet indicates an interrupt inhibit instruction (Step S305). When the control packet indicates the interrupt inhibit instruction (Yes at Step S305), the processing unit 3b does not execute the interrupt operation (Step S309).

In contrast, when the control packet does not indicate the interrupt inhibit instruction (No at Step S305), the processing unit 3b determines whether the priority of the interrupt instruction indicated by the control packet is lower than that of a standby interrupt instruction (Step S306).

When the priority of the interrupt instruction indicated by the control packet is lower than that of a standby interrupt instruction (Yes at Step S306), the processing unit 3b stops the computing operation that is currently being executed and executes an interrupt instruction having the priority higher than the restriction of the interrupt instruction (Step S307). Then, the processing unit 3b completes the operation.

In contrast, when the control packet is not received (No at Step S302), the processing unit 3b waits for the control packet. Furthermore, when the control packet does not indicate the interrupt instruction (No at Step S303), the processing unit 3b waits for a new control packet.

Furthermore, when the priority of the interrupt instruction indicated by the control packet is higher than that of the suspended interrupt instruction (No at Step S306), the processing unit 3b does not execute the interrupt instruction (Step S309). Then, the processing unit 3b completes the operation.

When the control packet releases the restriction of the interrupt instruction (Yes at Step S304), the processing unit 3b executes the suspended interrupt instruction (Step S308) and then completes the operation.

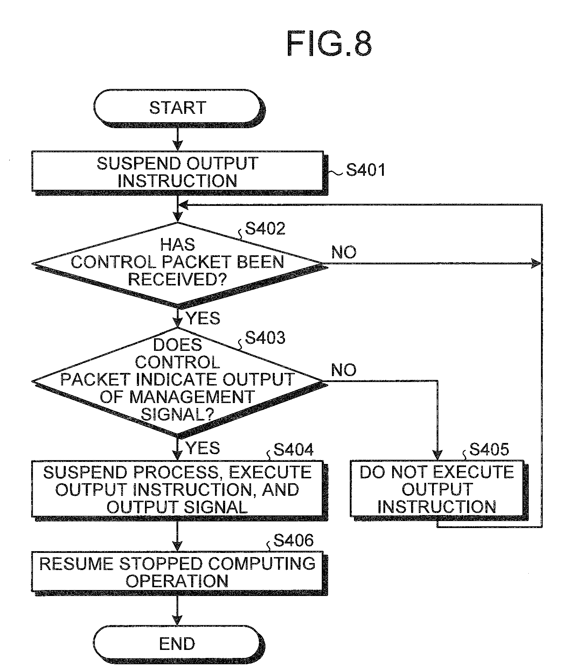

In the following, the flow of the output instruction performed by the computing device 1b will be described with reference to FIG. 8. FIG. 8 is a flowchart illustrating the flow of an output instruction executed by the computing device. Each of the computing devices 1b starts an operation triggered when an output instruction occurs.

First, the suspending unit 5b suspends the output instruction (Step S401). Then, the processing unit 3b determines whether a control packet has been received by the receiving unit 2b (Step S402). When the control packet has been received (Yes at Step S402), in accordance with the sequence numbers and the instructions stored in the storing unit 6b, the processing unit 3b determines whether the instruction indicated by the control packet is an output instruction (Step S403).

When the instruction indicated by the control packet is an output instruction (Yes at Step S403), the processing unit 3b executes the output instruction that is suspended by the suspending unit 5b and outputs a signal (Step S404). Then, the processing unit 3b resumes the stopped computing operation (Step S406) and completes the operation.

In contrast, when the control packet is not received (No at Step S402), the processing unit 3b waits to receive the control packet. Furthermore, when the instruction indicated by the received control packet is not an output instruction (No at Step S403), the processing unit 3b does not execute the suspended output instruction (Step S405) and waits to receive the control packet.

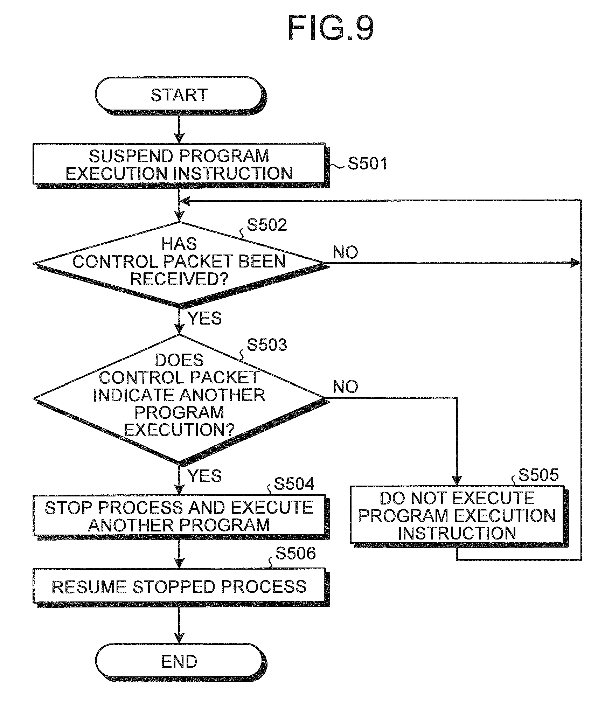

In the following, the flow of a program execution instruction performed by each of the computing devices 1b will be described with reference to FIG. 9. FIG. 9 is a flowchart illustrating the flow of a program execution instruction executed by the computing device. Each of the computing devices 1b starts an operation triggered when a program execution instruction occurs.

First, the suspending unit 5b suspends the program execution instruction (Step S501). Then, the processing unit 3b determines whether a control packet has been received by the receiving unit 2b (Step S502). When a control packet has been received (Yes at Step S502), in accordance with the sequence numbers and the instructions stored in the storing unit 6b, the processing unit 3b determines whether the instruction indicated by the control packet is a program execution instruction (Step S503).

When the instruction indicated by the control packet is a program execution instruction (Yes at Step S503), the processing unit 3b executes the program execution instruction that is suspended by the suspending unit 5b (Step S504). Then, the processing unit 3b completes the executed program and resumes the stopped of the process (Step S506).

In contrast, when the control packet has not been received (No at Step S502), the processing unit 3b waits to receive the control packet. Furthermore, when the instruction indicated by the received control packet is not a program execution instruction (No at Step S503), the processing unit 3b does not execute the suspended program execution instruction (Step S505) and waits to receive the control packet.

As described above, in the parallel computer system according to the second embodiment, when an instruction to be executed on a process has occurred, the instruction that has been occurred is suspended. Then, when a control packet associated with the suspended instruction is received, the parallel computer system executes the suspended instruction. Accordingly, the parallel computer system can synchronize the time at which each of the computing devices 1b connected to the network executes the instruction. Therefore, the parallel computer system can cooperatively control each of the computing devices 1b and performs the computation.

For example, when a creation instruction has occurred, each of the computing devices 1b suspends the creation instruction that has occurred and executes the creation instruction after receiving a control packet associated with the creation instruction, thus synchronizing the time at which the initialization operation is executed.

Accordingly, when executing the initialization operation, each of the computing devices 1b does not need to wait for a long time to read a process allocated to another computing device 1b. Therefore, the parallel computer system according to the second embodiment can synchronize the time period from the acquisition of the process executed by each of the computing devices 1b until the completion of the computing operation with the time period during which each of the computing devices 1b actually executes the computing operation.

Furthermore, when the transmission instruction has occurred, each of the computing devices 1b suspends the transmission instruction that has occurred and executes the transmission instruction after receiving a control packet associated with the transmission instruction, thus synchronizing the time at which the transmission instruction to transmit the execution result of the process is transmitted. Accordingly, because the parallel computer system according to the second embodiment recognizes, at a time, the computing devices 1b to which a new process can be assigned, thus suitably allocating a process and using computer resources.

Specifically, when a calculation operation of a process is completed in the order of the computing device A1D, the computing device D1G, and the computing device B1E illustrated in FIG. 2, the parallel computer system synchronizes the time at which each of the computing devices A to D executes the transmission. Accordingly, the parallel computer system can select a computing device to which a new process is allocated from among the computing device A1D, the computing device B1E, and the computing device D1G.

Accordingly, for example, when two new processes are allocated, the parallel computer system allocates each of the processes to the computing device A1D and the computing device B1E. Specifically, because the parallel computer system can allocate the processes to the computing device A1D and the computing device B1E that are closely arranged each other, thus appropriately use the computer resources.

Furthermore, when a stop instruction has occurred, each of the computing devices 1b suspends the stop instruction that has occurred and then executes the stop instruction after receiving a control packet associated with the stop instruction. Therefore, the parallel computer system can synchronize the time at which each of the computing devices 1b executes the stop instruction.

Accordingly, for example, the parallel computer system can allow the calculation operation of a process executed by each of the computing devices 1b to temporarily stop and synchronize the time at which the resident program is executed. Then, the parallel computer system simultaneously performs the maintenance of each of the computing devices 1b, thus effectively managing the computer resources.

Here, when executing the resumption instruction and resuming the computing operation of the stopped process, each of the computing devices 1b needs to execute the initialization operation again. Accordingly, when executing the resumption instruction at the different time, each of the computing devices 1b needs to wait until another computing device 1b executes the initialization operation.

Accordingly, the parallel computer system according to the second embodiment synchronizes the time at which each of the computing devices 1b executes the resumption instruction. Specifically, when a resumption instruction has occurred, each of the computing device 1b suspends the resumption instruction that has occurred and then executes the suspended resumption instruction after receiving the control packet associated with the resumption instruction.

Accordingly, when executing the initialization operation, each of the computing devices 1b does not need to wait for a long time in order to read the process allocated to another computing device 1b. Therefore, the parallel computer system according to the second embodiment can synchronize the time period from the acquisition of the process performed by each of the computing devices 1b until the completion of the computing operation with the time period during which each of the computing devices 1b actually executes the computing operation.

Furthermore, when the interrupt instruction has occurred, each of the computing device 1b suspends the interrupt instruction that has occurred and then executes the suspended interrupt instruction after receiving a control packet associated with the suspended instruction. Accordingly, in the parallel computer system, because each of the computing devices 1b synchronizes the time at which the interrupt instruction is executed, the interrupt operation can be executed without delaying the progress of the calculation operation executed by each of the computing devices 1b.

Furthermore, because the parallel computer system can match the priority of the interrupt operation executed by each of the computing devices 1b, thus preventing the variation of the interrupt operations due to the priority of each process allocated to each of the computing devices 1b. Accordingly, the parallel computer system can execute the interrupt operation without shifting the progress of the calculation operation executed by each of the computing devices 1b.

Furthermore, when the interrupt inhibit instruction has occurred, each of the computing devices 1 suspends the interrupt inhibit instruction that has occurred and then executed the interrupt inhibit instruction after receiving a control packet associated with the suspended interrupt inhibit instruction. Accordingly, the parallel computer system can stop, at a time, the interrupt operation executed by each of the computing devices 1b, thus allowing the allocated process to be executed with first priority.

Furthermore, when an output instruction has occurred, each of the computing devices 1 suspends the output instruction that has occurred and then executes the output instruction after receiving a control packet associated with the suspended output instruction. Accordingly, because the parallel computer system synchronizes the time at which each of the computing devices 1b executes the output instruction for outputting a signal, thus synchronizing the time at which a signal transmitted from each of the computing devices 1b is transmitted. Therefore, the parallel computer system can simultaneously grasp the status of each of the computing devices 1b, thus accurately grasp the status of the computer resources.

Furthermore, there may be a case in which each of the computing devices 1b controls the progress of an operation executed on a program in accordance with a signal output from another computing device 1b. Here, because the parallel computer system synchronizes the time at which each of the computing devices 1b executes the output instruction; therefore, each of the computing devices 1b synchronizes the time at which the progress of the process is controlled.

To accurately identify the progress of the process performed by another computing device 1b, each of the computing device 1b preferably uses each signal that is simultaneously output from each of the computing devices 1b. Accordingly, the parallel computer system synchronizes the time at which each of the computing devices 1b controls, thus appropriately controlling the operation executed by each of the computing devices 1b.

Furthermore, when a program execution instruction has occurred, each of the computing devices 1b suspends the program execution instruction that has occurred and then executes the program execution instruction after receiving a control packet associated with the suspended program execution instruction. Accordingly, the parallel computer system synchronizes the time at which the program execution instruction is executed, thus synchronizing the progress of a program (e.g., resident program) that is newly executed by each of the computing devices 1b. Therefore, because the parallel computer system accurately grasps the progress of an operation executed on a new program performed by each of the computing devices 1b, parallel computer system can accurately grasp the computer resources.

### [c] Third Embodiment

The computing device, the parallel computer system, and the synchronous program disclosed in the present invention have been described; however, the present invention is not limited to the embodiments described above. Therefore, another embodiment will be described as a third embodiment.

### (1) About a control packet

The processing unit 3b according to the second embodiment executes various operations in accordance with the sequence number contained in the control packet; however, the embodiment is not limited thereto. For example, the parallel computer system may also use a header of a control packet. Specifically, when a predetermined location has a bit of "1" in the header of the control packet, it may also be assumed that the processing unit 3b indicates the creation instruction.

Furthermore, in accordance with the sequence information associated with the instructions illustrated in FIG. 4, the processing unit 3b according to the second embodiment determines an instruction indicated by a control packet. However, the present invention is not limited to the embodiment. For example, packet numbers and operations to be executed may also have another association.

### (2) About a control packet creating device

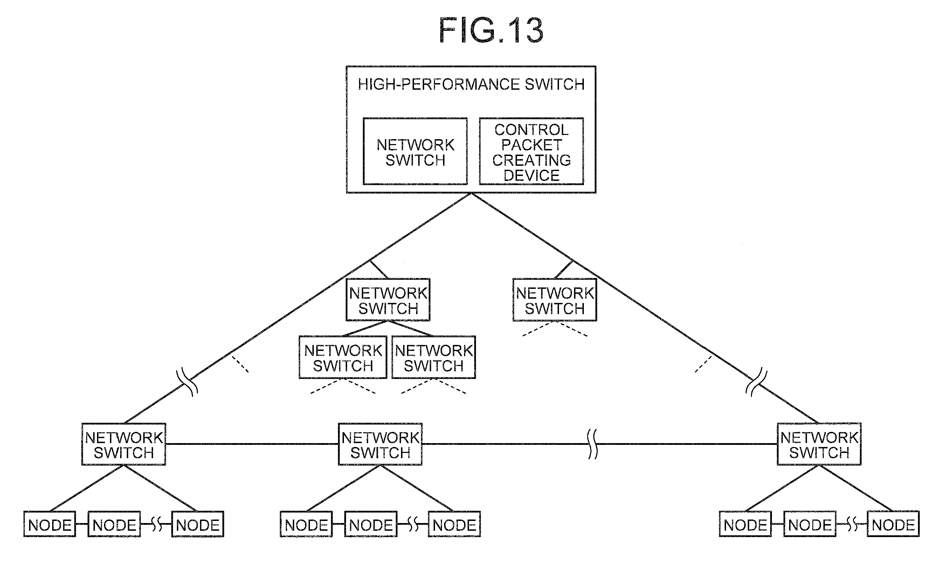

The control packet creating device 4b according to the second embodiment is connected to a general switch arranged at the top level in a value exchange network; however, the embodiment is not limited thereto. For example, as illustrated in FIG. 13, it is also possible to arrange, at the top level in the value exchange network, a high-functional switch by allowing the general switch to have a function performed by the control packet creating device 4b. FIG. 13 is a schematic diagram illustrating a parallel computer system having a high-performance switch.

Furthermore, the control packet creating device 4b according to the second embodiment is arranged at the top level in the value exchange network; however, the present invention is not limited to the embodiment. For example, the control packet creating device 4b may also be arranged at any location in the value exchange network as long as each of the computing devices 1b can simultaneously receive a control packet. Furthermore, the control packet creating device 4b may also transmit a control packet to each of the computing devices 1b by using a management network in addition to using the value exchange network.

Furthermore, the control packet creating device can dynamically change a transmission interval during which a control packet is transmitted in various units, such as nanosecond, microsecond, millisecond, second, or clock units. Furthermore, the control packet creating device can transmit the control packet for each control packet at different intervals.

Furthermore, the control packet creating device 4b according to the first embodiment and the second embodiment periodically creates a control packet and transmits it to each of the computing devices 1b. The interval during which a control packet is created and transmitted is not limited but can be changed by an user in accordance with the configuration of each of the computing devices 1b and the parallel computer system.

### (3) About a storing unit

As illustrated in FIG. 4, the storing unit 5b according to the second embodiment stores therein, in an associated manner, the sequence numbers contained in the control packet and the instructions executed by the processing unit 3b. However, the embodiment is not limited thereto. For example, it is also possible to use the different relationship between the sequence number contained in the control packet and the processes executed by the processing unit 3b. Furthermore, an user that uses the parallel computer system may also change, using, for example, the management server 11, the relationship between the sequence numbers contained in the control packet and the processes executed by the processing unit 3b.

### (4) Program

In the above explanation, a description has been given of the parallel computer system and the computing devices 1b that implement various operations using a hardware; however, the computing device, the parallel computer system, and the synchronous program disclosed in the present invention is not limited thereto. They may also be implemented by a program prepared in advance and executed by a computer.

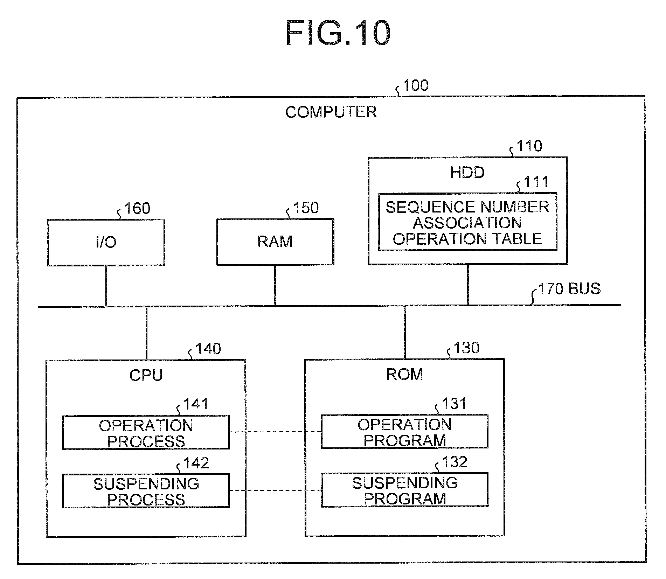

Accordingly, in the following, a computer that executes a program having the same function as that performed by the computing device 1b according to the second embodiment will be described as an example with reference to FIG. 10. In the embodiment, in addition to the computing device 1b described in the second embodiment, the computer also has the same function as that performed by each of the computing devices 1 described in the first embodiment. FIG. 10 is a block diagram illustrating a computer that executes a program having the same function as that performed by the computing device 1 and the computing device 1b.

A computer 100 illustrated in FIG. 10 includes a hard disk drive (HDD) 110, a random access memory (RAM) 150, a central processing unit (CPU) 140, and a read only memory (ROM) 130, which are connected via a bus 170. Furthermore, an input/output (I/O) 160, i.e., a connecting terminal unit, which is used to connect to a value exchange network and a management network, is connected to the bus 170.

The ROM 130 stores therein, in advance, an operation program 131 and a suspending program 132. The CPU 140 reads the operation program 131 and the suspending program 132 from the ROM 130 and executes them so that each of the programs 131 and 132 functions as an operation process 141 and a suspending process 142, respectively, as illustrated in FIG. 10. The operation process 141 has the same function as that performed by the processing unit 3 illustrated in FIG. 1 and the processing unit 3b illustrated in FIG. 3. The suspending process 142 has the same function as that performed by the suspending unit 5 illustrated in FIG. 1 and the suspending unit 5b illustrated in FIG. 3.

Furthermore, the HDD 110 stores therein a sequence number association operation table 111. The sequence number association operation table 111 contains information similar to the sequence numbers and the instructions stored in the storing unit 6b according to the second embodiment. In accordance with the sequence numbers and the instructions stored in the sequence number association operation table 111, the operation process 141 determines the instruction indicated by a received control packet.

The computer 100 has the same function as that performed, using the I/O 160, by the receiving unit according to the first embodiment and the second embodiment. The programs 131 and 132 do not need to be suspended by the ROM 130. For example, each of the programs 131 and 132 may also be stored in the HDD 110 and be loaded in the RAM 150 by the CPU 140, in which each of the programs 131 and 132 functions as each of the processes 141 and 142, respectively.

Furthermore, the CPU 140 may also be a micro controller unit (MCU) or a micro processing unit (MPU).

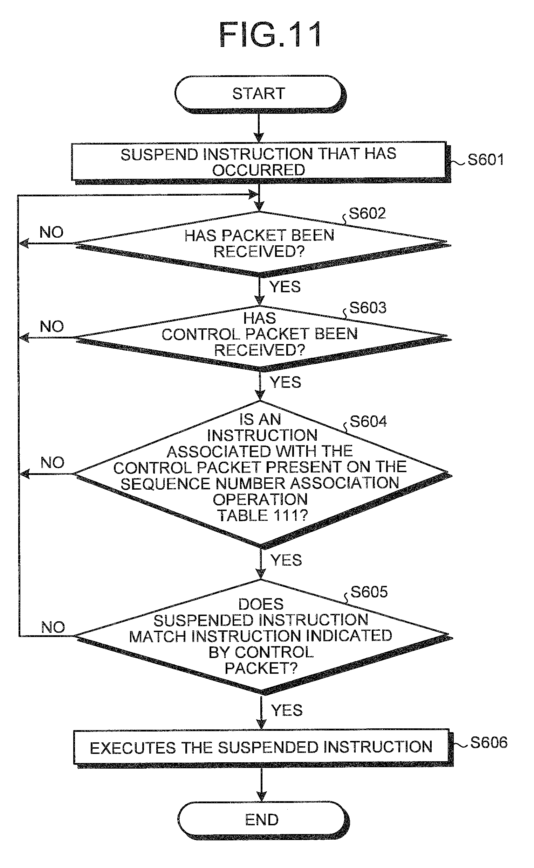

In the following, the flow of operations performed by the programs executed by the computer will be described with reference to FIG. 11. FIG. 11 is a flowchart illustrating the flow of operations performed by programs. The program starts a process triggered when an instruction to be executed occurs.

First, the suspending process 142 suspends an instruction that has occurred (Step S601). Then, the operation process 141 determines whether a packet has been received by the I/O 160 (Step S602). When the packet has been received (Yes at Step S602), the control process 141 determines whether the received packet is a control packet (Step S603).

Then, when the received packet is a control packet (Yes at Step S603), the operation process 141 determines whether an instruction associated with the control packet is present based on the sequence number association operation table 111 (Step S604). When an instruction associated with the control packet is stored (Yes at Step S604), the operation process 141 determines whether the instruction associated with the control packet is the same as the instruction that is suspended (Step S605).

When the instruction associated with the control packet is the same as the suspended instruction (Yes at Step S605), the operation process 141 executes the suspended instruction (Step S606). In contrast, when a packet has not been received (No at Step S602), the operation process 141 waits to receive another packet. Furthermore, when the received packet is not the control packet (No at Step S603), the operation process 141 waits to receive another packet.

Furthermore, when an instruction indicated by a control packet is not stored in the sequence number association operation table 111 (No at Step S604), the operation process 141 waits to receive another packet. Furthermore, when the instruction indicated by the control packet is not the same instruction as that suspended by the suspending process 142 (No at Step S605), the operation process 141 waits to receive another packet.

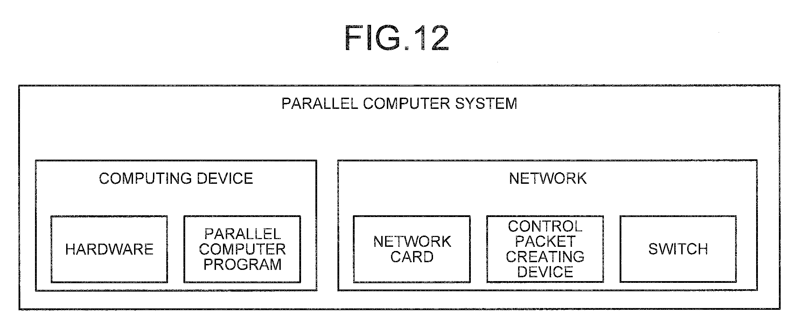

The parallel computer program described in the embodiments can be implemented by a program prepared in advance and executed by a computer, such as a personal computer or a workstation. Furthermore, as illustrated in FIG. 12, the parallel computer system includes a computing device 1b that has the parallel computer program and a hardware executing the parallel computer program.

The parallel computer system is connected to computing devices via networks using a network card. Furthermore, the parallel computer system is connected to a control packet creating device and a general switch using the networks. FIG. 12 is a schematic diagram illustrating the configuration of the parallel computer system.

The parallel computer program can be transmitted using a network, such as the Internet. The parallel computer program is stored in a computer-readable storage medium, such as a hard disk, a flexible disk (FD), a CD-ROM, an MO, and a DVD. Furthermore, the parallel computer program can also be implemented by the computer reading it from the storage medium.

### Reference Signs List

- 1: COMPUTING DEVICE
- 1B: COMPUTING DEVICE
- 1C: COMPUTING DEVICE
- 1D: COMPUTING DEVICE A
- 1E: COMPUTING DEVICE B
- 1F: COMPUTING DEVICE C
- 1G: COMPUTING DEVICE D
- 1b: COMPUTING DEVICE
- 2: RECEIVING UNIT
- 2b: RECEIVING UNIT
- 3: PROCESSING UNIT
- 3b: PROCESSING UNIT
- 4: CONTROL INFORMATION CREATING DEVICE
- 4b: CONTROL PACKET CREATING DEVICE
- 5: SUSPENDING UNIT
- 5b: SUSPENDING UNIT
- 6b: STORING UNIT
- 7: NODE
- 8: NODE
- 9: NODE
- 10: NODE
- 11b: MANAGEMENT SERVER
- 12: CONTROL PACKET CREATING UNIT
- 13: SEQUENCE NUMBER ASSIGNING UNIT
- 14: CONTROL PACKET TRANSMISSION UNIT
- 20: NETWORK SWITCH
- 100: COMPUTER
- 110: HARD DISC DRIVE (HDD)
- 130: READ ONLY MEMORY (ROM)
- 140: CENTRAL PROCESSING UNIT (CPU)
- 150: RANDOM ACCESS MEMORY (RAM)
- 160: INPUT/OUTPUT (I/O)
- 170: BUS

## Claims

1. A computing device comprising:
a receiving unit that receives control information indicating an instruction to be executed on a process that is distributed or an instruction contained in the process that is distributed, from a control information creating device that transmits the control information to each computing device on a network;
a suspending unit that suspends execution of an instruction when the instruction to be executed on the process occurs or the instruction contained in the process that is distributed is executed; and
a processing unit that executes the suspended instruction by the suspending unit when the suspended instruction by the suspending unit is associated with the instruction indicated by the control information that is received by the receiving unit.

2. The computing device according to claim 1, further comprising a storing unit that stores therein, in an associated manner, a sequence number representing a creation order of the control information created by the control information creating device and the instruction to be executed on the process, wherein
the receiving unit receives the control information from the control information creating device to which the sequence number is added, and
the processing unit executes the suspended instruction by the suspending unit when the processing unit determines, in accordance with the sequence number and the instruction stored in the storing unit, that the instruction indicated by the control information received by the receiving unit is associated with the suspended instruction by the suspending unit.

3. The computing device according to claim 1 or 2, wherein
the suspending unit temporarily suspends a creation instruction for allowing the process to be executed when the creation instruction occurs, and
the processing unit executes the suspended creation instruction by the suspending unit when the suspended creation instruction by the suspending unit is associated with the instruction indicated by the received control information that is received by the receiving unit.

4. The computing device according to claim 1 or 2, wherein
the suspending unit temporarily suspends a transmission instruction for transmitting an execution result of the process when the transmission instruction occurs, and
the processing unit executes the suspended transmission instruction by the suspending unit when the suspended transmission instruction by the suspending unit is associated with the instruction indicated by the received control information that is received by the receiving unit.

5. The computing device according to claim 1 or 2, wherein
the suspending unit temporarily suspends a stop instruction for temporarily stopping executing the instruction when the stop instruction occurs, and
the processing unit executes the suspended stop instruction by the suspending unit when the suspended stop instruction by the suspending unit is associated with the instruction indicated by the received control information that is received by the receiving unit.

6. The computing device according to claim 1 or 2, wherein
the suspending unit temporarily suspends a resumption instruction for resuming executing a stopped instruction when the resumption instruction occurs, and
the processing unit executes the suspended resumption instruction by the suspending unit when the suspended resumption instruction by the suspending unit is associated with the instruction indicated by the received control information that is received by the receiving unit.

7. The computing device according to claim 1 or 2, wherein
the suspending unit temporarily suspends an interrupt instruction for executing a process different from a process that is being executed when the interrupt instruction occurs, and
the processing unit executes the suspended interrupt instruction by the suspending unit when the suspended interrupt instruction by the suspending unit is associated with the instruction indicated by the received control information that is received by the receiving unit.

8. The computing device according to claim 1 or 2, wherein
the suspending unit temporarily suspends an interrupt inhibit instruction for inhibiting execution of the interrupt instruction when the interrupt inhibit instruction occurs, and
the processing unit executes the suspended interrupt inhibit instruction by the suspending unit when the suspended interrupt inhibit instruction by the suspending unit is associated with the instruction indicated by the received control information that is received by the receiving unit.

9. The computing device according to claim 1 or 2, wherein
the suspending unit temporarily suspends an output instruction for outputting a signal indicating the status of the computing device when the output instruction has been received, and
the processing unit executes the suspended output instruction by the suspending unit when the suspended output instruction by the suspending unit is associated with the instruction indicated by the received control information received by the receiving unit.

10. The computing device according to claim 1 or 2, wherein
the suspending unit temporarily suspends a program execution instruction for executing a program different from the process when the instruction to be executed on the process is stopped and receiving the program execution instruction, and
the processing unit executes the suspended program execution instruction by the suspending unit when the suspended program execution instruction by the suspending unit is associated with the instruction indicated by the received control information that is received by the receiving unit.

11. A parallel computer system comprising:
a plurality of computing devices that includes,
a receiving unit that receives control information indicating an instruction to be executed on a process,
a suspending unit that suspends an instruction when the instruction to be executed on the process occurs,
a processing unit that executes the suspended instruction by the suspending unit when the suspended instruction by the suspending unit is associated with the instruction indicated by the received control information that is received by the receiving unit, and
a control information creating unit that periodically creates the control information and periodically transmits the computing devices by using multi address transmission.

12. A synchronous program causing a computer to execute a procedure comprising:
receiving control information indicating an instruction executed on a process;
suspending an instruction when the instruction to be executed on the process occurs; and
executing the instruction suspended at the suspending when the instruction suspended at the suspending is associated with the instruction indicated by the control information received at the receiving.
